# EUROPEAN PATENT APPLICATION

(11) **EP 4 475 247 A1**
(43) Date of publication of application: **11.12.2024**
(21) Application number: 23746612.3
(22) Date of filing: 05.01.2023
(51) Int. Cl.: H01M 10/052, H01M 4/13, H01M 4/134, H01M 4/40, H01M 4/62, H01M 10/0568

(54) **NON-AQUEOUS LITHIUM SECONDARY BATTERY**

(30) Priority: 31.01.2022 JP 2022012745
(71) Applicant: Panasonic Intellectual Property Management Co., Ltd., Osaka-shi, Osaka 540-6207 (JP)
(72) Inventor: SADAKANE, Takuya, Kadoma-shi, Osaka 571-0057 (JP)
(74) Representative: Novagraaf International SA
(86) International application number: PCT/JP2023/000091
(87) International publication number: WO 2023/145395

(57) **Abstract**

A non-aqueous lithium secondary battery (10) according to an embodiment of the present invention comprises a positive electrode (11), a negative electrode (12), and a non-aqueous electrolyte, wherein during charging, a lithium metal precipitates on the negative electrode collector (40), and during discharging, the lithium metal dissolves in the non-aqueous electrolyte. The non-aqueous lithium secondary battery (10) contains a heterocyclic amine compound disposed between a positive electrode collector (30) and the negative electrode (12).

## Description

### TECHNICAL FIELD

The present disclosure relates to a non-aqueous lithium secondary battery.

### BACKGROUND ART

In recent years, a non-aqueous electrolyte secondary battery has been required to have further higher capacity. As the non-aqueous electrolyte secondary battery having a high capacity, a lithium-ion battery is exclusively used. In the lithium-ion battery, for example, graphite and an alloy-type active material such as a silicon-containing compound have been used in combination as a negative electrode active material to increase the capacity, but the increase in the capacity reaching the limit.

As a non-aqueous electrolyte secondary battery having a high capacity beyond the lithium-ion battery, a non-aqueous lithium secondary battery in which lithium metal precipitates on a negative electrode during charge and the lithium metal dissolves in a non-aqueous electrolyte during discharge has been proposed (for example, see Patent Literature 1 and 2).

### CITATION LIST

### PATENT LITERATURE

PATENT LITERATURE 1: Japanese Unexamined Patent Application Publication No. 2001-243957
PATENT LITERATURE 2: Japanese Unexamined Patent Application Publication No. Hei 9-259929

### SUMMARY

The non-aqueous lithium secondary battery has a problem of a high heat-generating rate if abnormality such as internal short circuit or the like occurs compared with other non-aqueous electrolyte secondary batteries such as the lithium-ion battery. It is an advantage of the present disclosure to inhibit heat generation in case of abnormality in the non-aqueous lithium secondary battery.

A non-aqueous lithium secondary battery according to the present disclosure comprises: a positive electrode including a positive electrode current collector and a positive electrode mixture layer formed on the current collector; a negative electrode including a negative electrode current collector; and a non-aqueous electrolyte, wherein lithium metal precipitates on the negative electrode current collector during charge, and the lithium metal dissolves in the non-aqueous electrolyte during discharge, and the non-aqueous lithium secondary battery includes a heterocyclic amine compound interposed between the positive electrode current collector and the negative electrode.

According to the non-aqueous lithium secondary battery of the present disclosure, heat generation in case of abnormality is inhibited to reduce the heat-generating rate.

### BRIEF DESCRIPTION OF DRAWING

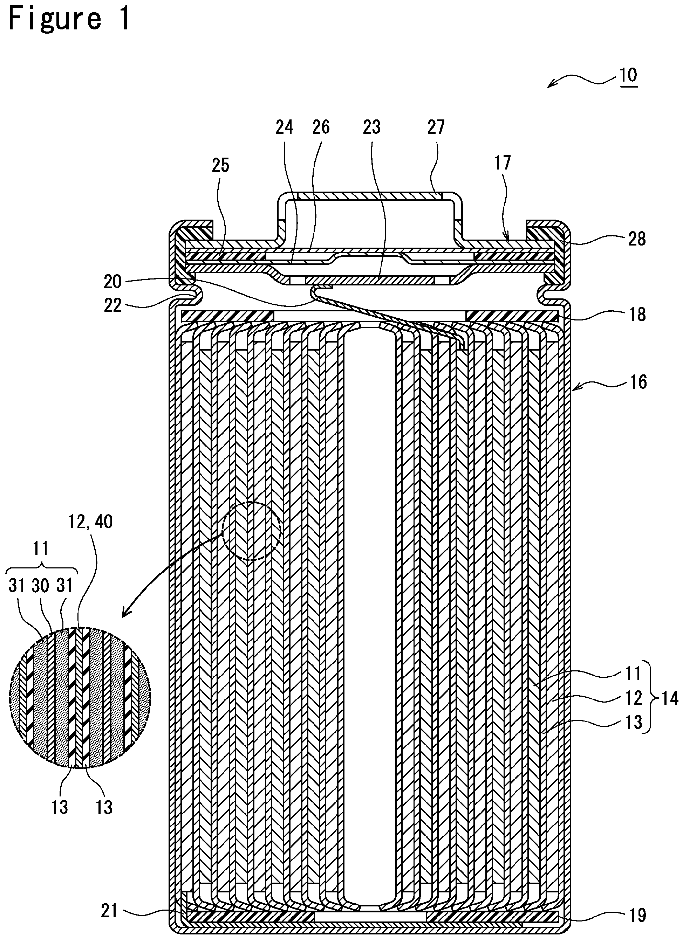

FIG. 1 is a sectional view of a non-aqueous lithium secondary battery of an example of an embodiment.

### DESCRIPTION OF EMBODIMENTS

As noted above, the non-aqueous lithium secondary battery in which lithium metal precipitates on a negative electrode during charge and the lithium metal dissolves in a non-aqueous electrolyte during discharge is expected to have a high capacity beyond the lithium-ion battery, but has a problem of a high heat-generating rate if abnormality occurs. The present inventors have made intensive investigation to solve the above problem, and consequently found that heat generation in case of abnormality is specifically inhibited to remarkably reduce the heat-generating rate by disposing a heterocyclic amine compound between a positive electrode current collector and a negative electrode.

It is considered that the heterocyclic amine compound present between the positive electrode current collector and the negative electrode is decomposed and gasified at a temperature near a melting point of lithium metal to react with the lithium metal if abnormality such as internal short circuit occurs to raise a temperature of the battery. When the positive electrode is decomposed to release oxygen, an amount of the heat generation increases to increase the heat-generating rate. However, according to the non-aqueous lithium secondary battery of the present disclosure, it is presumed that a part of lithium can be deactivated before the release of oxygen from the positive electrode, and accordingly the heat-generating rate can be remarkably reduced.

Hereinafter, an example of an embodiment of the non-aqueous lithium secondary battery according to the present disclosure will be described in detail with reference to the drawing. Selective combinations of a plurality of embodiments and modified examples, described below, are included in the present disclosure.

Hereinafter, a cylindrical battery in which a wound electrode assembly 14 is housed in a bottomed cylindrical exterior housing can 16 will be exemplified, but an exterior of the battery is not limited to a cylindrical exterior housing can, and may be, for example, a rectangular exterior housing can (rectangular battery) or an exterior composed of laminated sheets including a metal layer and a resin layer (laminate battery). The electrode assembly may be a laminated electrode assembly in which a plurality of positive electrodes and a plurality of negative electrodes are alternately stacked with a separator interposed therebetween.

FIG. 1 is a view schematically illustrating a cross section of a non-aqueous lithium secondary battery 10 of an example of an embodiment. As illustrated in FIG. 1, the non-aqueous lithium secondary battery 10 comprises the wound electrode assembly 14 including a positive electrode 11 and a negative electrode 12, a non-aqueous electrolyte, and the exterior housing can 16 housing the electrode assembly 14 and the non-aqueous electrolyte. The non-aqueous lithium secondary battery 10 is a non-aqueous electrolyte secondary battery in which lithium metal precipitates on a negative electrode current collector 40 during charge and the lithium metal dissolves in the non-aqueous electrolyte during discharge. When the negative electrode 12 has a negative electrode mixture layer, the lithium metal precipitates on the negative electrode mixture layer, and the lithium metal precipitates on the negative electrode current collector 40 via the negative electrode mixture layer. Although details will be described later, the non-aqueous lithium secondary battery 10 includes a heterocyclic amine compound interposed between a positive electrode current collector 30 and the negative electrode 12.

The electrode assembly 14 has a positive electrode 11, a negative electrode 12, and a separator 13, and has a wound structure in which the positive electrode 11 and the negative electrode 12 are spirally wound with the separator 13 interposed therebetween. The positive electrode 11 has a positive electrode current collector 30 and a positive electrode mixture layer 31 including a positive electrode active material. On the other hand, in an initial state before charge, the negative electrode 12 preferably contains only a negative electrode current collector 40 and preferably does not contain a negative electrode active material. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

All of the positive electrode 11, negative electrode 12, and separator 13 that constitute the electrode assembly 14 have an elongated band-shape, and are spirally wound to be alternately stacked in a radial direction of the electrode assembly 14. Two separators 13 are formed to be one size larger than at least the positive electrode 11, and disposed to sandwich the positive electrode 11. The electrode assembly 14 has: a positive electrode lead 20 connected to the positive electrode current collector 30 by welding or the like; and a negative electrode lead 21 connected to the negative electrode current collector 40 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends along an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

As noted above, the exterior housing can 16 is a bottomed cylindrical metallic container having an opening at one side in an axial direction. A gasket 28 is provided between the exterior housing can 16 and the sealing assembly 17 to achieve sealability inside the battery and insulability between the exterior housing can 16 and the sealing assembly 17. On the exterior housing can 16, a grooved portion 22 in which part of a side wall thereof projects inside for supporting the sealing assembly 17 is formed. The grooved portion 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts of the vent members 24 and 26. If the battery causes abnormality to increase the internal pressure, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, the negative electrode 12, the separator 13, and the non-aqueous electrolyte, which constitute the non-aqueous lithium secondary battery 10, particularly the positive electrode 11 and the non-aqueous electrolyte will be described in detail.

### [Positive Electrode]

The positive electrode 11 includes the positive electrode current collector 30 and the positive electrode mixture layer 31 formed on the current collector. For the positive electrode current collector 30, a foil of a metal stable within a potential range of the positive electrode 11, such as aluminum, a film in which such a metal is disposed on a surface layer, and the like may be used. The positive electrode mixture layer 31 is composed of the positive electrode active material, a conductive agent, and a binder. The positive electrode mixture layer 31 is preferably formed on both the surfaces of the positive electrode current collector 30. The positive electrode 11 may be produced by, for example, applying a positive electrode mixture slurry including the positive electrode active material, the conductive agent, the binder, and the like on the positive electrode current collector 30, and drying and then rolling the coating film to form the positive electrode mixture layers 31 on both the surfaces of the positive electrode current collector 30.

For the positive electrode active material, a lithium-metal composite oxide is used. The lithium-metal composite oxide is a composite oxide containing metal elements such as Co, Mn, Ni, and Al, in addition to Li. The metal element constituting the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among them, at least one selected from the group consisting of Co, Ni, and Mn is preferably contained. An example of a preferable composite oxide is a lithium-metal composite oxide containing Ni, Co, and Mn, or a lithium-metal composite oxide containing Ni, Co, and Al.

Examples of the conductive agent included in the positive electrode mixture layer 31 include carbon materials such as carbon black, acetylene black, Ketjenblack, graphite, carbon nanotube, carbon nanofiber, and graphene. A content of the conductive agent is, for example, greater than or equal to 0.01 parts by mass and less than or equal to 10 parts by mass, and preferably greater than or equal to 0.02 parts by mass and less than or equal to 5 parts by mass, based on 100 parts by mass of the positive electrode active material.

Examples of the binder included in the positive electrode mixture layer 31 include fluorine-containing resins such as polytetrafluoroethylene (PTFE) and polyvinylidene fluoride (PVdF), polyacrylonitrile (PAN), a polyimide, an acrylic resin, and a polyolefin. These resins may be used in combination with carboxymethylcellulose (CMC) or a salt thereof, polyethylene oxide (PEO), and the like. A content of the binder is, for example, greater than or equal to 0.1 parts by mass and less than or equal to 10 parts by mass, and preferably greater than or equal to 0.5 parts by mass and less than or equal to 5 parts by mass, based on 100 parts by mass of the positive electrode active material.

The non-aqueous lithium secondary battery 10 further includes a heterocyclic amine compound interposed between the positive electrode current collector 30 and the negative electrode 12. The heterocyclic amine compound present between the positive electrode current collector 30 and the negative electrode 12 specifically inhibits heat generation if abnormality such as internal short circuit occurs, and the heat-generating rate is remarkably reduced. In the present embodiment, the heterocyclic amine compound is contained in the positive electrode mixture layer 31 formed on the positive electrode current collector 30. A content of the heterocyclic amine compound is preferably less than or equal to 5 mass% based on a mass of the positive electrode mixture layer 31.

Although the heterocyclic amine compound may be disposed on, for example, a surface of the positive electrode mixture layer 31, a surface of the negative electrode current collector 40, or a surface of the separator 13, the heterocyclic amine compound is preferably substantially uniformly dispersed in the positive electrode mixture layer 31. When the heterocyclic amine compound is contained in the positive electrode mixture layer 31, the heterocyclic amine compound is added into the above positive electrode mixture slurry, which is excellence in productivity. In addition, if the positive electrode 11 is decomposed in case of abnormality, the amount of heat generation increases. However, the heterocyclic amine compound contained in the positive electrode mixture layer 31 more effectively inhibits the heat generation.

The heterocyclic amine compound is preferably a compound having a heteroring including a nitrogen atom and an amino group bonded to the heteroring. The heteroring may be a five-membered ring, a seven-membered ring, or the like, but is preferably a six-membered ring. An example of the preferable six-membered ring is a pyridine ring, a diazine ring, or a triazine ring. Use of the six-membered ring amine compound including a nitrogen atom more remarkably exhibits the effect of inhibiting the heat generation. The amino group bonded to the heteroring may be any of a primary, secondary, or tertiary amino group.

Specific examples of the preferable heterocyclic amine compound include at least one selected from six-membered ring compounds represented by the following formulae (1) to (3).

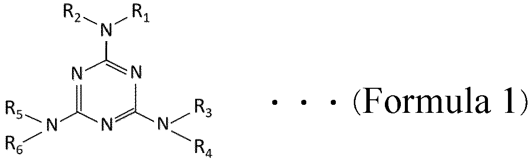

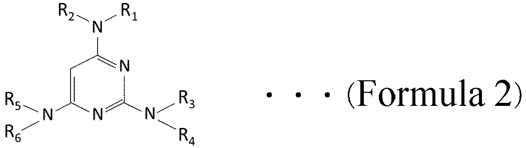

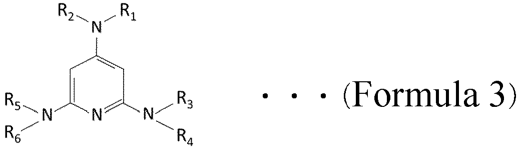

In the formulae, R1 to R6 each independently represent H or an organic group including at least one element selected from the group consisting of H, N, and O and having greater than or equal to 1 and less than or equal to 10 carbon atoms. At least one of, preferably greater than or equal to two of, R1 to R6 represent H, and the six-membered ring compound represented by the formulae (1) to (3) preferably has greater than or equal to one primary amino group. The heterocyclic amine compound particularly preferably includes at least a melamine derivative, which is the six-membered ring compound represented by the formula (1). The positive electrode mixture layer 31 may contain only the melamine derivative represented by the formula (1) as the heterocyclic amine compound.

The six-membered ring compound represented by the formula (1) (melamine derivative) may have a secondary amino group or tertiary amino group in which R1 to R6 have greater than or equal to 1 and less than or equal to 10 carbon atoms, but preferably has at least one primary amino group. An example of the preferable six-membered ring compound represented by the formula (1) includes melamine in which R1 to R6 represent H. The heterocyclic amine compound included in the positive electrode mixture layer 31 contains, for example, melamine as a main component, and may be substantially only melamine. The main component herein means a component at the largest mass proportion in the objective material.

As noted above, the content of the heterocyclic amine compound is preferably less than or equal to 5 mass% based on the mass of the positive electrode mixture layer 31. Although a small amount of the heterocyclic amine compound exhibits the effect of inhibiting the heat generation, the content is preferably greater than or equal to 0.1 mass%. In this case, the effect of inhibiting the heat generation becomes more remarkable. A preferable range of the content of the heterocyclic amine compound is, for example, greater than or equal to 0.1 mass% and less than or equal to 5 mass%, more preferably greater than or equal to 0.5 mass% and less than or equal to 4.5 mass%, and particularly preferably greater than or equal to 1 mass% and less than or equal to 3 mass%.

The non-aqueous lithium secondary battery 10 may further include at least one selected from the group consisting of cyanuric acid and isocyanuric acid interposed between the positive electrode current collector 30 and the negative electrode 12. In this case, the effect of inhibiting heat generation can be further expected. The at least one selected from the group consisting of cyanuric acid and isocyanuric acid may be disposed on, for example, a surface of the positive electrode mixture layer 31, a surface of the negative electrode current collector 40, or a surface of the separator 13, but is preferably substantially uniformly dispersed in the positive electrode mixture layer 31.

The positive electrode mixture layer 31 may include melamine cyanurate as the heterocyclic amine compound. The melamine cyanurate is an organic salt composed of melamine and cyanuric acid, and has a structure in which melamine and cyanuric acid form a hydrogen bond. A content of the at least one selected from the group consisting of cyanuric acid and isocyanuric acid is, for example, greater than or equal to 0.1 mass% and less than or equal to 5 mass%, more preferably greater than or equal to 0.5 mass% and less than or equal to 4.5 mass%, and particularly preferably greater than or equal to 1 mass% and less than or equal to 3 mass% based on the mass of the positive electrode mixture layer 31. When the positive electrode mixture layer 31 includes melamine, the positive electrode mixture layer 31 may include cyanuric acid at an amount of moles same as of melamine.

### [Negative Electrode]

The negative electrode 12 is an electrode for precipitating lithium metal during charge, and includes a negative electrode current collector 40. The lithium metal precipitated on the negative electrode current collector 40 is derived from lithium ions in the non-aqueous electrolyte, and the precipitated lithium metal dissolves in the electrolyte liquid due to discharge. Although the negative electrode 12 may be composed of lithium metal, for example, lithium metal foil, or composed of the negative electrode current collector 40 or film in which a lithium metal layer is formed on the surface by deposition or the like (in this case, lithium is the active material), the negative electrode 12 preferably does not contain the negative electrode active material in the initial state before charge.

That is, the negative electrode 12 is preferably composed of only the negative electrode current collector 40 in the initial state before charge. This case may increase the volume energy density of the battery. Note that, if lithium metal foil, a current collector having a lithium metal layer, or the like is used, the volume energy density of the battery decreases at an extent of the thickness of the lithium layer. Here, the initial state before charge means a state immediately after assembling of the non-aqueous lithium secondary battery 10 (immediately after manufacturing), and a state where the battery reactions do not proceed.

The negative electrode 12 may comprise the negative electrode current collector and a negative electrode mixture layer supported on a surface of the negative electrode current collector. From the viewpoint of achievement of the non-aqueous electrolyte secondary battery having a high capacity, the thickness of the negative electrode mixture layer is set to be sufficiently small so that lithium metal can precipitate on the negative electrode during charge. When the negative electrode 12 comprises the negative electrode mixture layer, a ratio (N/P) of a theoretical capacity (N) of the negative electrode 12 to a theoretical capacity (P) of the positive electrode 11 in the non-aqueous lithium secondary battery 10 is, for example, less than 0.7. In this case, the lithium metal precipitates on the surface of the negative electrode mixture layer during charge, and the lithium metal precipitated on the surface of the negative electrode mixture layer dissolves in the non-aqueous electrolyte during discharge.

The negative electrode mixture layer may be formed by, for example, applying a negative electrode slurry in which a negative electrode mixture is dispersed in a dispersion medium on the surface of the negative electrode current collector, and then drying the resultant. The coating film after drying may be rolled as necessary. The negative electrode mixture layer may be formed on one surface of the negative electrode current collector, or may be formed on both the surfaces thereof. As the dispersion medium, water or N-methyl-2-pyrrolidone (NMP) is used, for example.

The negative electrode mixture includes the negative electrode active material as an essential component, and may include a binder, a conductive agent, a thickener, and the like as optional components. As the binder and the conductive agent, those exemplified in the positive electrode may be used. Examples of the thickener include carboxymethylcellulose (CMC) and a modified product thereof (such as a Na salt).

The negative electrode active material may include a carbon material that occludes and releases lithium ions. Examples of the carbon material that occludes and releases lithium ions include graphite (natural graphite or artificial graphite), easily graphitized carbon (soft carbon), and hardly graphitized carbon (hard carbon). Among these, graphite, which has excellent stability of charge and discharge and which has a small irreversible capacity, is preferable.

The negative electrode active material may include an alloy-type material. The alloy-type material refers to a material including at least one metal that may form an alloy with lithium, and examples thereof include silicon, tin, a silicon alloy, a tin alloy, and a silicon compound. As the alloy-type material, a composite material having a lithium-ion conductive phase and silicon particles dispersed in this phase may be used. As the lithium-ion conductive phase, a silicate phase, a silicon oxide phase containing greater than or equal to 95 mass% of silicon dioxide, a carbon phase, and the like may be used.

As the negative electrode active material, the alloy-type material and the carbon material may be used in combination. In this case, a mass proportion of the carbon material in a total of the alloy-type material and the carbon material is, for example, preferably greater than or equal to 80 mass%, and more preferably greater than or equal to 90 mass%.

The negative electrode current collector 40 is composed of metal foil such as, for example, copper, nickel, iron, and stainless steel alloy (SUS). Among these, copper foil, which has high conductivity, is preferable. The copper foil is metal foil containing copper as a main component, and may be composed of substantially only copper. A thickness of the copper foil is preferably greater than or equal to 5 µm and less than or equal to 20 µm. The negative electrode 12 is composed of, for example, only copper foil having a thickness of greater than or equal to 5 µm and less than or equal to 20 µm before charge and discharge of the battery, and the lithium metal precipitates on both the surfaces of the copper foil due to charge to form the lithium metal layer.

The negative electrode current collector 40 may have a layer (protective layer) including a solid electrolyte, an organic substance, or an inorganic substance on the surface. The protective layer has an effect of uniformizing reaction on the current collector surface, and the lithium metal may uniformly precipitate on the negative electrode current collector 40, and accordingly expansion of the negative electrode 12 may be inhibited. Examples of the solid electrolyte include a sulfide-type solid electrolyte, phosphate-type solid electrolyte, a perovskites-type solid electrolyte, and a garnet-type solid electrolyte.

The sulfide-type solid electrolyte is not particularly limited as long as the solid electrolyte contains a sulfur component and has lithium-ion conductivity. Specific examples of a raw material of the sulfide-type solid electrolyte include materials containing Li, S, and a third component A. Examples of the third component A include at least one selected from the group consisting of P, Ge, B, Si, I, Al, Ga, and As. Specific examples of the sulfide-type solid electrolyte include Li₂S-P₂S₅, 70Li₂S-30P₂S₅, 80Li₂S-20P₂S₅, Li₂S-SiS₂, and LiGe_{0.25}P_{0.75}S₄.

The phosphate-type solid electrolyte is not particularly limited as long as the solid electrolyte contains a phosphate component and has lithium-ion conductivity. Examples of the phosphate-type solid electrolyte include Li_{1+X}Al_{X}Ti_{2-X}(PO₄)₃ (0<X<2, particularly preferably O<X≤1) such as Li_{1.5}Al_{0.5}Ti_{1.5}(PO₄)₃ and Li_{1+X}Al_{X}Ge_{2-X}(PO₄)₃ (0<X<2, particularly preferably 0<X≤1).

For the organic substance layer, a lithium-conductive substance such as polyethylene oxide and methyl polymethacrylate is preferably used. For the inorganic substance layer, a ceramic material such as SiO₂, Al₂O₃, and MgO is preferably used.

### [Separator]

For the separator 13, a porous sheet having an ion permeation property and an insulation property is used. Specific examples of the porous sheet include a fine porous thin film, a woven fabric, and a nonwoven fabric. For a material of the separator, a polyolefin such as polyethylene, and polypropylene, cellulose, and the like are preferable. The separator 13 may have a single-layer structure or a multilayer structure. On a surface of the separator 13, a resin layer having high heat resistance, such as an aramid resin, may be formed.

On a boundary between the separator 13 and at least one selected from the positive electrode 11 and the negative electrode 12, a filler layer including an inorganic filler may be formed. Examples of the inorganic filler include oxides containing metal elements such as Ti, Al, Si, and Mg, and a phosphoric acid compound. The filler layer may be formed by applying a slurry containing the filler on the surface of the positive electrode 11, the negative electrode 12, or the separator 13.

### [Non-Aqueous Electrolyte]

The non-aqueous electrolyte includes a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen of these solvents is at least partially substituted with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate. Among them, at least one selected from EC, EMC, and DMC is preferably used, and a mixed solvent of EC, EMC, and DMC is particularly preferably used.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. An example of the preferable lithium salt is a salt having an oxalate complex as an anion. Adding this lithium salt in the non-aqueous solvent hardly generates dendrite of the lithium metal during charge, which inhibits expansion of the negative electrode 12. The lithium salt having an oxalate complex as an anion functions as the electrolyte salt, but decreases its concentration due to decomposition on the negative electrode 12. Thus, another electrolyte salt is preferably used in combination.

The lithium salt having an oxalate complex as an anion is preferably included in the non-aqueous electrolyte at a concentration of at least 0.01 M (mol/L). Adding this lithium salt at the concentration of greater than or equal to 0.01 M makes the effect of inhibiting expansion of the negative electrode 12 more remarkable. An upper limit of an amount of the added lithium salt is preferably the solubility degree. This lithium salt is added as much as possible in the non-aqueous solvent within a range not precipitating the lithium salt during use of the battery.

The lithium salt having an oxalate complex as an anion preferably contains boron or phosphorus, and is at least one selected from the group consisting of lithium difluoro(oxalato)borate (LiBF₂(C₂O₄)), lithium bis(oxalato)borate (LiB(C₂O₄)₂), LiPF₄(C₂O₄), and LiPF₂(C₂O₄)₂, for example. Among these, LiBF₂(C₂O₄) is preferable. Since this lithium salt is decomposed on the negative electrode 12, the presence or absence of the addition and the addition amount can be analyzed by analyzing the decomposed component.

Examples of the other lithium salt include LiBF₄, LiClO₄, LiPF₆, LiAsF₆, LiSbF₆, LiAlCl₄, LiSCN, LiCF₃SO₃, LiCF₃CO₂, and imide salts such as LiN(SO₂CF₃)₂ and LiN(CₗF₂ₗ₊₁SO₂)(CₘF₂ₘ₊₁SO₂) {l and m represent an integer of greater than or equal to 1}. Among these, LiPF₆ is preferably used. A concentration of LiPF₆ is, for example, greater than or equal to 0.8 M (mol/L) and less than or equal to 4 M (mol/L).

The non-aqueous electrolyte may include another additive to be decomposed on the negative electrode 12. The non-aqueous electrolyte includes, for example, at least one selected from the group consisting of vinylene carbonate (VC), fluoroethylene carbonate (FEC), and vinyl ethyl carbonate (VEC). Adding VC and the like further inhibits expansion of the negative electrode 12 to more improve the cycle characteristics. This is presumably because a coating derived from the VC and the like having a low decomposition potential is formed on the coating derived from the lithium salt having an oxalate complex as an anion to stabilize the coating.

### EXAMPLES

Hereinafter, the present disclosure will be described in more detail with Examples, but the present disclosure is not limited to these Examples.

### <Example 1>

### [Production of Positive Electrode]

As a positive electrode active material, a lithium-containing transition metal oxide represented by LiNi_{0.90}Co_{0.07}Al_{0.03}O₂ (average particle diameter: 10 µm) was used. The positive electrode active material, acetylene black, polyvinylidene fluoride, and melamine were mixed at a solid-content mass ratio of 100:2:2:2, and an appropriate amount of N-methyl-2-pyrrolidone (NMP) was further added and stirred to prepare a positive electrode mixture slurry. Then, this positive electrode mixture slurry was applied on both surfaces of a positive electrode current collector composed of aluminum foil, and the coating film was dried. The coating film was rolled by using a roller, and then cut to a predetermined electrode size to produce a positive electrode in which a positive electrode mixture layer is formed in the order on both the surfaces of the positive electrode current collector.

### [Production of Negative Electrode]

Electrolytic copper (thickness: 10 µm) was cut to a predetermined electrode size to prepare a negative electrode. On the copper foil, a negative electrode mixture was not applied.

### [Preparation of Non-Aqueous Electrolyte Liquid]

Ethylene carbonate (EC) and dimethyl carbonate (DMC) were mixed at a volume ratio of 3:7. Into this mixed solvent, LiPF₆ was dissolved at a concentration of 1.0 M (mol/L) and LiBF₂(C₂O₄) was dissolved at a concentration of 0.1 M (mol/L) to prepare a non-aqueous electrolyte liquid.

### [Production of Battery]

In an inert gas atmosphere, the above positive electrode to which a tab made of aluminum was attached and the above negative electrode to which a tab made of nickel was attached were spirally wound via a separator made of polyethylene to produce a wound electrode assembly. This electrode assembly was housed in an exterior composed of an aluminum laminate, the above non-aqueous electrolyte liquid was injected, and then an opening of the exterior was sealed to produce a non-aqueous lithium secondary battery T1.

### <Example 2>

A non-aqueous lithium secondary battery T2 was produced in the same manner as in Example 1 except that, in the production of the positive electrode, melamine cyanurate was added instead of melamine.

### <Example 3>

A non-aqueous lithium secondary battery T3 was produced in the same manner as in Example 1 except that, in the production of the positive electrode, melamine was not added.

### <Example 4>

A non-aqueous lithium secondary battery T4 was produced in the same manner as in Example 1 except that, in the production of the positive electrode, alumina was added instead of melamine.

Each of the batteries T1 to T4 of Examples was subjected to an accelerating rate calorimeter (ARC) test by the following method. Table 1 shows the evaluation results.

### [ARC Test]

Each of the batteries T1 to T4 was charged at a constant current of 40 mA until 4.3 V, and then inserted into a cylindrical sample container made of SUS304. By using an ARC tester manufactured by NETZSCH Japan K.K., the container was heated to 300°C with a "Heat-wait-search" measurement mode. A temperature rise due to self-heat generation of the battery was measured from 110°C, and heat-generating rates of the batteries T1 to T4 at 170°C, 180°C, 190°C, 200°C, 210°C, and 220°C were calculated. A temperature sensor was disposed on a surface of the cylindrical sample container.

**[Table 1]**

| | Positive electrode additive | Heat-generating rate at each temperature: log (heat-generating rate)/°C min⁻¹ | | | | | |
|---|---|---|---|---|---|---|---|
| | | 170°C | 180°C | 190°C | 200°C | 210°C | 220°C |
| T1 | Melamine | 0.4 | 1.0 | 0.6 | 0.8 | 2.7 | 2.8 |
| T2 | Melamine cyanurate | 0.3 | 0.7 | 0.5 | 0.7 | 2.5 | 2.7 |
| T3 | None | 0.5 | 1.1 | 2.9 | 3.0 | 3.0 | 3.1 |
| T4 | Alumina | 0.4 | 1.5 | 2.9 | 3.0 | 3.0 | 3.1 |

From the results shown in Table 1, it is understood that both the batteries T1 and T2 of Examples 1 and 2 exhibit a low heat-generating rate compared with the batteries T3 and T4 of Examples 3 and 4. According to the batteries T1 and T2, heat generation in case of abnormality can be inhibited. Particularly, when melamine cyanurate was used as the positive electrode additive (battery T2), the effect of inhibiting heat generation was more remarkable. Meanwhile, when alumina was used as the positive electrode additive (battery T4), the effect of inhibiting heat generation was not obtained at all.

### <Example 5>

### [Production of Negative Electrode]

Water was added into a negative electrode mixture, and the mixture was stirred to prepare a negative electrode mixture slurry. For the negative electrode mixture, a mixture of artificial graphite (average particle diameter: 25 µm), styrene-butadiene rubber (SBR), and sodium carboxymethylcellulose (CMC-Na) was used. In the negative electrode mixture, a mass ratio between the artificial graphite, SBR, and CMC-Na was 100:1:1. The negative electrode mixture slurry was applied on a surface of copper foil, and the coating film was dried and then rolled to obtain a laminate in which a negative electrode mixture layer was formed on both the surfaces of the copper foil. The laminate was cut to a predetermined size to produce a negative electrode.

### [Preparation of Non-Aqueous Electrolyte]

Into a mixed solvent (volume ratio 1: 1) of ethylene carbonate (EC) and diethyl carbonate (DEC), LiPF₆ was dissolved at a concentration of 1.2 mol/L to prepare a non-aqueous electrolyte.

A battery T5 was produced in the same manner as in Example 2 except that the negative electrode and the non-aqueous electrolyte obtained above were used. Note that, in order not to precipitate Li metal on the surface of the negative electrode during charge, a thickness of the negative electrode mixture layer was adjusted. Specifically, a ratio (N/P) of a theoretical capacity (N) of the negative electrode to a theoretical capacity (P) of the positive electrode was set to be greater than or equal to 0.7.

### <Example 6>

A battery T6 was produced in the same manner as in Example 5 except that melamine cyanurate was not added into the positive electrode mixture.

The battery T5 of Example 5 and the battery T6 of Example 6 were subjected to the ARC test similarly to the above evaluation.

**[Table 2]**

| | Positive electrode additive | Heat-generating rate at each temperature: log (heat-generating rate)/°C min⁻¹ | | | | | |
|---|---|---|---|---|---|---|---|
| | | 170°C | 180°C | 190°C | 200°C | 210°C | 220°C |
| T5 | Melamine cyanurate | 0.7 | 2.7 | 2.8 | 2.9 | 2.9 | 2.9 |
| T6 | None | 1.0 | 2.3 | 2.7 | 2.8 | 2.8 | 2.8 |

From the results shown in Table 2, it is understood that the battery T5 of Example 5 exhibits a heat-generating rate comparable to the battery T6 of Example 6. That is, when the negative electrode in which Li metal did not precipitate on the surface during charge was used, the effect of inhibiting heat generation was not obtained at all even by using melamine cyanurate as the positive electrode additive.

### REFERENCE SIGNS LIST

10 Non-aqueous lithium secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode current collector, 31 Positive electrode mixture layer, 40 Negative electrode current collector

## Claims

1. A non-aqueous lithium secondary battery, comprising:
a positive electrode including a positive electrode current collector and a positive electrode mixture layer formed on the current collector;
a negative electrode including a negative electrode current collector; and
a non-aqueous electrolyte, wherein
lithium metal precipitates on the negative electrode current collector during charge, and the lithium metal dissolves in the non-aqueous electrolyte during discharge, and
the non-aqueous lithium secondary battery includes a heterocyclic amine compound interposed between the positive electrode current collector and the negative electrode.

2. The non-aqueous lithium secondary battery according to claim 1, wherein the heterocyclic amine compound is at least one selected from the group consisting of six-membered ring compounds represented by the formulae (1) to (3), 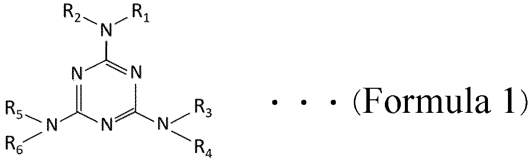 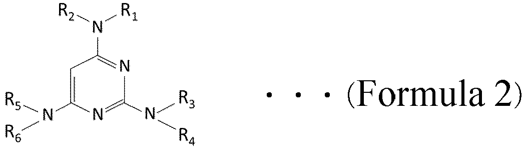 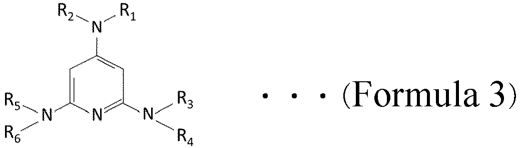 wherein R1 to R6 each independently represent H or an organic group including at least one element selected from the group consisting of H, N, and O and having greater than or equal to 1 and less than or equal to 10 carbon atoms.

3. The non-aqueous lithium secondary battery according to claim 2, wherein the heterocyclic amine compound includes at least the six-membered ring compound represented by the formula (1).

4. The non-aqueous lithium secondary battery according to any one of claims 1 to 3, wherein a ratio (N/P) of a theoretical capacity (N) of the negative electrode to a theoretical capacity (P) of the positive electrode is less than 0.7.

5. The non-aqueous lithium secondary battery according to any one of claims 1 to 4, wherein the heterocyclic amine compound is contained in the positive electrode mixture layer.

6. The non-aqueous lithium secondary battery according to claim 5, wherein a content of the heterocyclic amine compound is less than or equal to 5 mass% based on a mass of the positive electrode mixture layer.

7. The non-aqueous lithium secondary battery according to any one of claims 1 to 6, further including at least one selected from the group consisting of cyanuric acid and isocyanuric acid interposed between the positive electrode current collector and the negative electrode.

8. The non-aqueous lithium secondary battery according to claim 7, wherein the at least one selected from the group consisting of cyanuric acid and isocyanuric acid is contained in the positive electrode mixture layer.

9. The non-aqueous lithium secondary battery according to any one of claims 1 to 8, wherein
the non-aqueous electrolyte includes a lithium salt, and
the lithium salt is a salt having an oxalate complex as an anion.

10. The non-aqueous lithium secondary battery according to claim 9, wherein the lithium salt is lithium difluoro(oxalato)borate.
